# EUROPÄISCHE PATENTSCHRIFT

(11) **EP 2 248 205 B1**
(45) Veröffentlichungstag und Bekanntmachung des Hinweises auf die Patenterteilung: **22.05.2013**
(21) Anmeldenummer: 09717138.3
(22) Anmeldetag: 02.03.2009
(51) Int. Cl.: H01M 2/02, H01M 2/12, H01M 10/50, B60K 1/04, H01M 2/04

(54) **ELEKTROCHEMISCHER AKKUMULATOR UND FAHRZEUG MIT EINEM ELEKTROCHEMISCHEN AKKUMULATOR**
ELECTROCHEMICAL ACCUMULATOR AND VEHICLE COMPRISING AN ELECTROCHEMICAL ACCUMULATOR
ACCUMULATEUR ÉLECTROCHIMIQUE ET VÉHICULE ÉQUIPÉ DE CET ACCUMULATEUR ÉLECTROCHIMIQUE

(30) Priorität: 07.03.2008 DE 102008013188
(43) Veröffentlichungstag der Anmeldung: 10.11.2010
(73) Patentinhaber: Johnson Controls Hybrid and Recycling GmbH, 30419 Hannover (DE)
(72) Erfinder: WIEGMANN, Martin, 27246 Borstel (DE); HOH, Markus, 30823 Garbsen (DE); BIRKHOLZ, Jörg, 31157 Sarstedt (DE)
(74) Vertreter: Günther, Constantin
(86) Internationale Anmeldenummer: PCT/EP2009/001460
(87) Internationale Veröffentlichungsnummer: WO 2009/109346

(56) Entgegenhaltungen:
- WO-A-2007/043691
- WO-A-2007/118437
- DE-A1- 10 328 582
- DE-A1-102005 047 034

## Beschreibung

Die Erfindung betrifft einen elektrochemischen Akkumulator mit den Merkmalen des Oberbegriffs des Anspruchs 1. Die Erfindung betrifft ferner ein Fahrzeug mit diesem elektrochemischen Akkumulator.

Leistungsstarke Akkumulatoren mit hohen Energiedichten in den galvanischen Zellen werden insbesondere in Hybridfahrzeugen (beispielsweise ein Fahrzeug mit einem Akkumulator und einer Brennstoffzelle) und in Elektrofahrzeugen (beispielsweise Elektrostraßenfahrzeugen) verwendet.

Die hohen Energiedichten führen zu einer hohen Wärmeentwicklung. Um die Leistungsfähigkeit der Akkumulatoren zu erhalten und in einem weiten Betriebsfenster (das beispielsweise durch die Außentemperaturen gegeben ist) gewährleisen zu können, ist eine effektive Kühlung der Akkumulatoren notwendig.

Eine effektive und zudem kostengünstige Kühlung der Akkumulatoren wird über eine Luftkühlung erzielt. Für die Luftkühlung sind in dem Akkumulator zwischen den einzelnen Zellen Kühlluftkanäle vorgesehen, durch die mit Hilfe eines Ventilators Kühlluft geführt wird.

Bekannt ist es, die für die Kühlung des Akkumulators zur Verfügung gestellte Kühlluft dem klimatisierten Fahrgastraum zu entnehmen. Insbesondere in Ländern mit jährlich hohen Durchschnittstemperaturen ist die Verwendung der Außenluft ineffektiv. Zudem sind bei der Verwendung der Außenluft Filtersysteme erforderlich, um die Kühlluft von Verunreinigungen (beispielsweise Sand) zu befreien, bevor die Kühlluft durch den Akkumulator geführt wird. Hierdurch steigen die Kosten dieser Kühlsysteme.

Leistungsstarke Akkumulatoren mit hohen Energiedichten erfordern neben einer effektiven Kühlung ein Sicherheitssystem zum Schutz des Akkumulators vor einem Gasüberdruck in den Zellen. Der Gasüberdruck in den Zellen kann zu plötzlichen Reaktionen innerhalb der Zellen und zu einem Entzünden der Zellen führen. Dadurch können Menschen und die Umwelt geschädigt werden.

Als Sicherheitssystem gegen einen Gasüberdruck in den Zellen werden beispielsweise Berstöffnungen (Sollbruchstellen) in die Zellenwände integriert. Diese Sollbruchstellen können bei einem Schadensereignis (beispielsweise Kurzschluss, Überladung, Misshandlung), das mit einem Gasüberdruck in den Zellen verbunden ist, eine Explosion der Zellen verhindern. Die Zellen öffnen unter definierten Bedingungen (ein bestimmter Gasdruck in den Zellen) und bauen dabei den innerhalb der Zellen entstandenen Gasüberdruck ab. Das durch die geöffneten Sollbruchstellen entweichende Gas verlässt den Akkumulator dabei über die Kühlluftkanäle. Die aus den Zellen austretenden Gase sind für die Gesundheit schädlich.

Aufgabe der vorliegenden Erfindung ist es, einen effektiv geckühlten, leistungsfähigen und sicheren elektrochemischen Akkumulator bereitzustellen, der insbesondere für die Verwendung in Hybridfahrzeugen und Elektrofahrzeugen eingesetzt werden kann. Weiter ist es Aufgabe der vorliegenden Erfindung, ein Fahrzeug mit diesem leistungsstarken und für den Benutzer sicheren elektrochemischen Akkumulator bereitzustellen.

Die Aufgabe wird gelöst durch einen elektrochemischen Akkumulator (im Folgenden kurz Akkumulator genannt) mit den Merkmalen des Anspruchs 1 sowie durch ein Fahrzeug mit den Merkmalen des Anspruchs 9.

Der erfindungsgemäße Akkumulator vermeidet die Gefahr, dass aus den Zellen austretendes Gas über den Kühlluftraum in den Fahrgastraum gelangt und sich dort aufhaltende Personen gefährdet, indem der Kühlluftraum und der Entgasungsraum gasdicht voneinander getrennt ausgebildet und der Kühlluftraum und der Entgasungsraum unabhängig voneinander aus dem Gehäuse geführt sind.

Durch diese Konstruktion ist es ausgeschlossen, dass Gas aus den Zellen in den Kühlkreislauf und von dort in den Fahrgastraum gelangt.

Durch die strikte räumliche Trennung von Kühlsystem und Entgasungssystem wird die bei bekannten luftgekühlten Akkumulatoren notwendigen und aufwendigen Ventil- oder Klappenmechanismen vermieden, durch die das Kühlsystem vom Fahrgastraum getrennt wird. Durch den Wegfall der Ventil- oder Klappenmechanismen steigt zudem die Effizienz der Luftkühlung an, da mit den Ventil- oder Klappenmechanismen Widerstände für die Kühlluft entfallen. Zudem vermeidet der erfindungsgemäße Akkumulator ein von dem Entgasungssystem separates Kühlsystem mit eigenen Wärmetauschern, die die Kühlluft auf die erforderliche Eingangstemperatur temperieren. Aufgrund der hohen Herstellungskosten eines derartigen separaten Kühlsystems stellt der erfindungsgemäße Akkumulator eine kostengünstige Alternative dar.

Vorzugsweise sind die Zellen in dem erfindungsgemäßen Akkumulator zylindrisch ausgebildet. Zweckmäßig werden für die zylindrische Ausbildung der Zellen Dünnschichtelektroden verwendet, die zunächst gestapelt und dann gewickelt in die zylindrische Zelle eingebracht werden. Diese Konstruktion ermöglicht große aktive Elektrodenflächen auf geringem Raum unterzubringen, wodurch die Kapazität des Akkumulators erhöht wird.

In dem erfindungsgemässen Akkumulator umfasst der Kühlluftraum Kanäle, die außerhalb der Zellen an den Mänteln der zylindrischen Zellen geführt sind. Diese Ausführungsform ermöglicht einen unmittelbaren Kontakt zwischen dem Kühlsystem und den Zellen, wodurch eine effektive Kühlung erzielt wird. Zudem kann eine Mehrzahl Kühlluft führender Kanäle um jede einzelne Zelle geführt sein.

In einer Ausführungsform umfasst der Entgasungsraum zylindrische Räume, die außerhalb der Zellen an den Grundflächen oder den Eckflächen der Zellen angeordnet sind. Durch diese Konstruktion ist es möglich, die Berstöffnungen an den Grundflächen bzw. den Deckflächen der Zellen vorzusehen. Zudem ermöglicht diese Anordnung des Entgasungsraumes eine einfache Trennung des Kühlluftraums und des Entgasungsraums voneinander bei zylindrisch ausgebildeten Zellen.

Erfindungsgemäß ist vorgesehen, dass die Zellen Berstöffnungen aufweisen, über die die Innenräume der Zellen mit dem Entgasungsraum derart verbunden sind, dass Gas aus den Innenräumen der Zellen in den Entgasungsraum entweichen kann. Die Berstöffnungen dienen als Überdruckventil und führen das Gas aus den Innenräumen der Zellen gezielt in den Entgasungsraum ab.

In einer besonderen Ausführungsform sind die Berstöffnungen mit Berstmembranen verschlossen, die bei einem definierten Überdruck in den Innenräumen der Zellen einen Gasablass aus den Innenräumen der Zellen ermöglichen. Die Berstmembranen können so ausgebildet sein, dass sie bei einem bestimmten Überdruck aufbrechen. Es ist jedoch auch denkbar, dass sie als Überdruckventil wirken, das sich selbsttätig wieder schließt, wenn der Druck im Innenraum der Zelle unter einen vordefinierten Wert gesunken ist.

In einer besonderen Ausführungsform ist in dem Gehäuse ein Träger vorgesehen, in dem die Zellen im zusammengebauten Zustand fixiert sind.

Einen sehr leistungsfähigen Akkumulator erhält man, wenn die Zellen als Lithium-Ionenzellen ausgebildet sind.

Erfindungsgemäß ist ein Fahrzeug vorgesehen, das mit einem erfindungsgemäßen Akkumulator ausgestattet ist.

Zweckmäßig wird die Kühlluft aus dem Fahrgastraum mittels eines Ventilators in den Akkumulator geführt. Der Ventilator kann derart zwischen dem Akkumulator und Fahrgastraum angeordnet sein, dass die Kühlluft aus dem Fahrgastraum durch den Akkumulator gedrückt wird. Es ist aber auch denkbar, dass der Ventilator derart hinter dem Akkumulator angeordnet ist, dass die Kühlluft aus dem Fahrgastraum aus dem Akkumulator gezogen wird. Mit "hinter" ist gemeint, dass der Akkumulator zwischen dem Ventilator und dem Fahrgastraum angeordnet ist. Der Ventilator erzeugt einen Sog sowohl durch den Akkumulator als auch den Fahrgastraum, so dass die Kühlluft angezogen wird.

Besonders vorteilhaft ist das erfindungsgemäße Fahrzeug, wenn es als Hybridfahrzeug oder als Elektrofahrzeug ausgebildet ist, denn bei diesen Fahrzeugen werden leistungsfähige Akkumulatoren benötigt. Bei dem erfindungsgemäßen Fahrzeug kann es sich um Land-, Wasser- oder Luftfahrzeugen handeln.

Die Erfindung wird anhand eines in den nachfolgenden Figuren dargestellten Ausführungsbeispiels näher erläutert:
Es zeigen:
   - Figuren 1 und 2: zwei perspektivische Ansichten eines Moduls mit einer Vielzahl von galvanischen Zellen,
   - Figuren 3, 4 und 5: drei perspektivische Ansichten einer galvanischen Zelle des Moduls aus den Figuren 1 und 2.

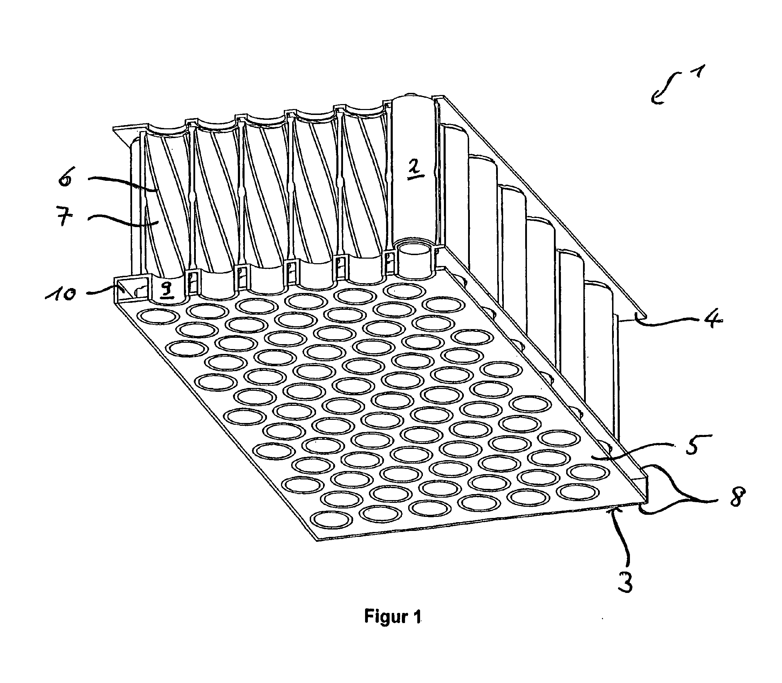

In Figur 1 ist ein Modul an einer Vielzahl von galvanischen Zellen 2 (im Folgenden kurz Zellen genannt) dargestellt.

Bei den Zellen 2 handelt es sich um zylindrisch gewickelte Rundzelle. Die gewickelte Anordnung umfasst eine positive Elektrode (nicht dargestellt) und eine negative Elektrode (nicht dargestellt) mit einem dazwischen liegenden Separator sowie einem nichtwässrigen Elektrolyten. Vorliegend handelt es sich bei den Zellen 2 um Lithium-Ionenzellen.

Die Zellen 2 sind in einem Träger 3 fixiert. Der Träger 3 ist aus Kunststoff gefertigt.

Der Träger 3 weist einen einfachen Boden 4 und einen Doppelboden 5 auf. Der einfache Boden 4 und der Doppelboden 5 sind über Stege 6 derart miteinander verbunden, dass sie beabstandet und parallel zueinander liegen. Zwischen jeweils 2 Stegen 6 ist ein Kanal 7 ausgebildet. Die Kanäle 7 bilden einen Kühlluftraum des erfindungsgemäßen Akkumulators. Durch die Kanäle 7 kann Kühlluft zum Kühlen der Zellen 2 geführt werden, beispielsweise mit Hilfe eines Ventilators.

Der Doppelboden 5 umfasst zwei parallel und beabstandet zueinander angeordnete Platten 8.

Zwischen den Platten 8 sind Zylindermäntel 9 angeordnet, die zylindrische Räume ausbilden. Für jede Zelle 2 ist ein Mantel 9 vorgesehen.

In dem Doppelboden 5 sind seitliche Lufteinlässe 10 zum Zuführen der Kühlluft vorgesehen.

Die Lufteinlässe 10 am Rand des Moduls 1 sind breiter als die Lufteinlässe 10, die nicht am Rand des Moduls angeordnet sind.

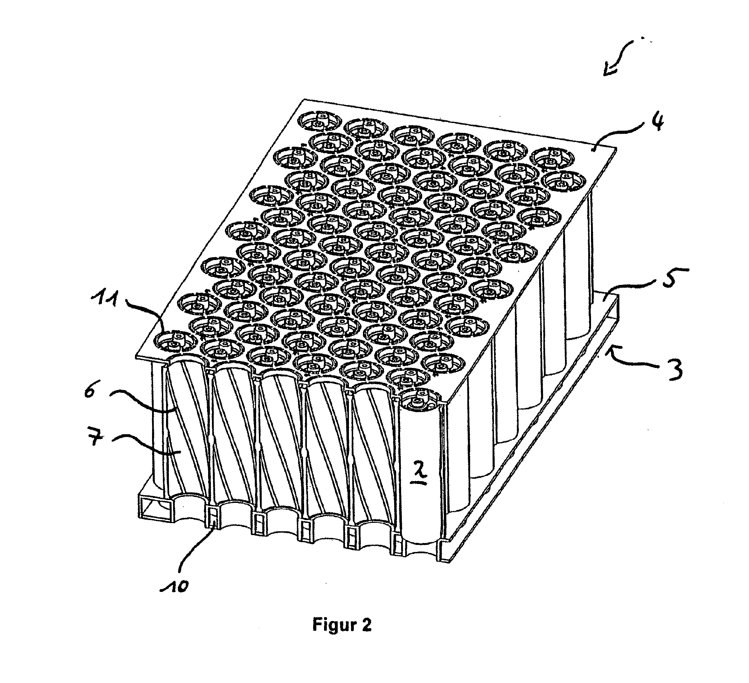

In Figur 2 sind Auslassschlitze 11 in dem einfachen Boden 4 zu erkennen. Durch die Auslassschlitze 11 kann Kühlluft, die durch Lufteinlässe 10 eintritt und durch die Kanäle 7 strömen, wieder austreten. Jeweils ein Kanal 7 mündet in einem Auslassschlitz 11. Im vorliegenden Fall sind um jede Zelle 6 Kanäle 7 mit jeweils sechs Auslassschlitzen 11 vorgesehen. Die Auslassschlitze 11 sind zylindrisch um die Zellen 2 angeordnet und jeweils von gleicher Länge. Selbstverständlich können die Auslassschlitze 11 und die Kanäle 7 auch unterschiedliche Längen aufweisen.

Durch die Stege 6 werden die einzelnen Kanäle einerseits voneinander getrennt, andererseits dienen sie der Fixierung der einzelnen Zellen 2.

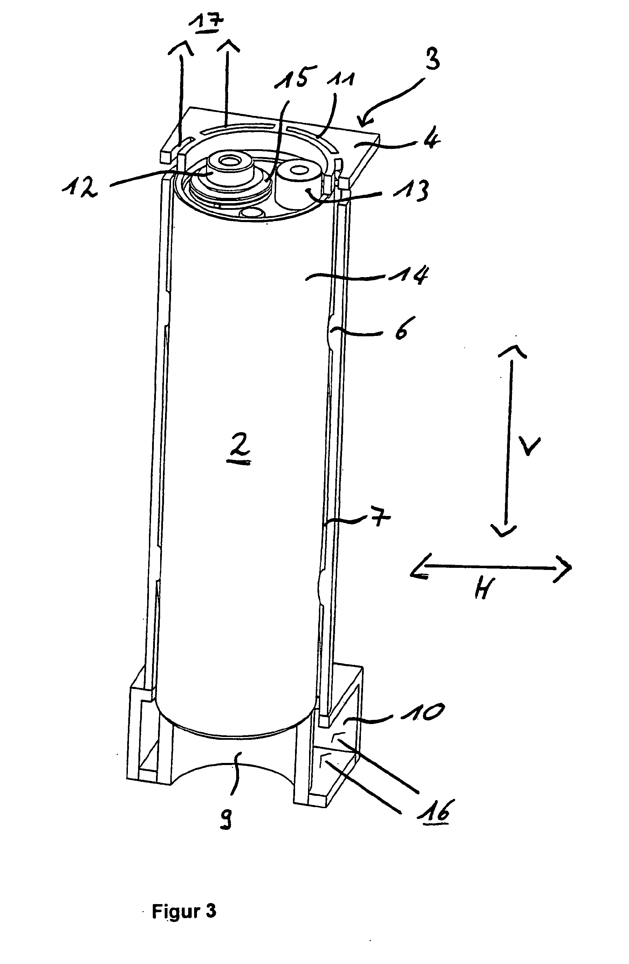

In Figur 3 ist eine einzelne Zelle 2 vergrößert dargestellt.

Die Zelle 2 weist einen positiven Pol 12 und einen negativen Pol 13 auf. Der negative Pol 13 ist mit dem Mantel 14 der Zelle 2 elektrisch verbunden. Der positive Pol 12 ist durch einen Isolierring 15 elektrisch von dem Mantel 14 isoliert. Der positive Pol 12 ist mit der positiven Elektrode in der Zelle 2 elektrisch verbunden.

Der Teil des Träger 3, der um die in Figur 3 dargestellte Zelle 2 verläuft, ist der besseren Übersicht halber nur etwa zur Hälfte dargestellt; der aus Sicht der Figur 3 vordere Teil des Trägers ist weggelassen worden.

Die Zelle 2 ist in dem Träger 3 zwischen dem einfachen Boden 4 und der oberen Platte 8 des Doppelbodens 5 derart fixiert, dass er sich nicht in vertikaler Richtung V relativ zum Träger 3 bewegen kann.

In horizontaler Richtung H wird die Zelle 2 durch die Stege 6 fixiert.

Durch Pfeile 16 ist Kühlluft angedeutet, die in den Lufteinlass 10 einströmt. Die Kühlluft strömt entlang der Kanäle 7 schraubenförmig zu den Auslassschlitzen 11. An den Auslassschlitzen 11 verlässt die Kühlluft den Träger 3; dies ist durch Pfeile 17 angedeutet.

In Figur 3 ist etwa die Hälfte des Zylindermantels 9 zu erkennen.

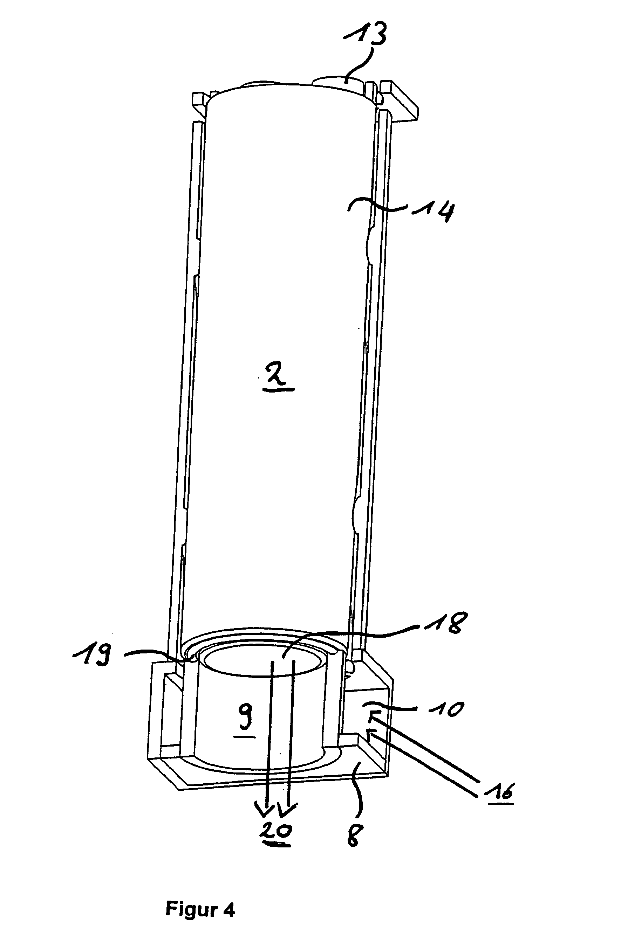

In Figur 4 ist zu erkennen, dass durch den Zylindermantel 9, dem Boden der Zelle 2, 18 und unteren Platte 8 von dem Einlass gasdicht getrennt ist. Der Boden 18 ist als Berstmembran ausgebildet. Die Berstmembran wirkt zum einen als Gasablassventil, wenn der Gasinnendruck in der Zelle 2 über einen vordefinierten Wert ansteigt. Darüber hinaus unterbricht die Berstmembran die elektrische Leitung zwischen der in der Zelle 2 vorgesehenen negativen Elektrode und dem Mantel 14 bzw. dem negativen Pol 13.

Zwischen der Zelle 2 und dem Zylinder 9 ist eine ringförmige Dichtung 19 vorgesehen, die verhindert, dass aus der Zelle 2 austretendes Gas 20 in den Bereich des Einlasses 10 und damit des Kanals 7 gelangt.

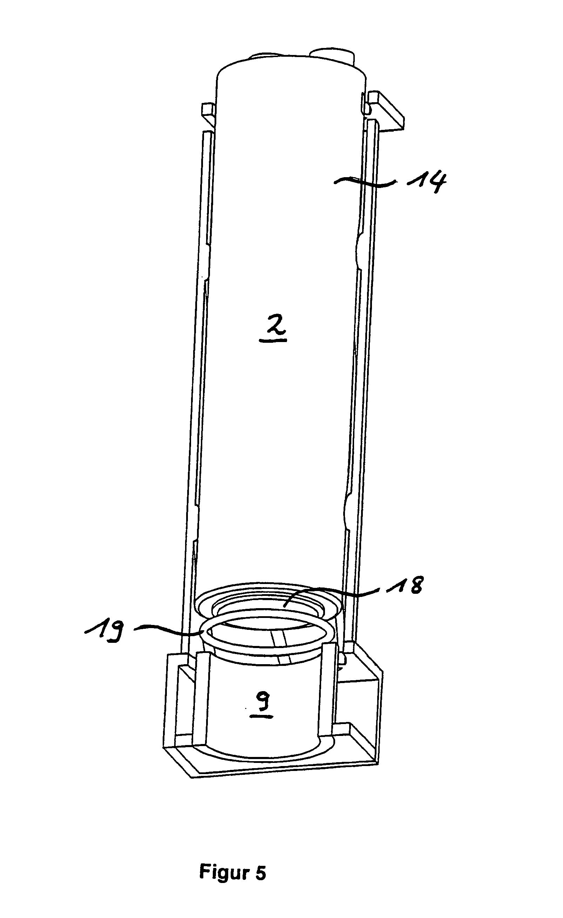

In Figur 5 ist die Zelle 2 aus den Figuren 3 und 4 in Explosionsdarstellung gezeigt, um die Anordnung der Dichtung 19 zu verdeutlichen. Der Boden 18 der Zelle 2, der als Berstmembran ausgebildet ist, erstreckt sich ein kleines Stück bis unterhalb des Randes des Mantels 14. Hierdurch wird der Anlagebereich der Dichtung 19 an die Zelle 2 vergrößert, wodurch die Wirksamkeit der Dichtung erhöht wird. Der Durchmesser der Dichtung 19 ist derart an den Boden 18 angepasst, dass die Dichtung 19 passgenau um den Boden 18 anliegt.

Die Anlage der Dichtung 19 an dem Zylindermantel 9 wird dadurch erhöht, dass der obere Rand des Zylindermantels 19 eine Ausnehmung 21 aufweist, in der die Dichtung 19 passgenau anliegt (Figur 4).

## Patentansprüche

1. Elektrochemischer Akkumulator mit
a) einer Vielzahl von galvanischen Zellen (2),
b) einem Deckel,
c) einem mit dem Deckel abgeschlossenen Gehäuse,
d) mindestens einem Anschlusspol zur elektrischen Kontaktierung des Akkumulators (1), der mit einer Gruppe der galvanischen Zellen (2) elektrisch verbunden ist,
e) einem Elektrolyten in dem Gehäuse,
f) einem Kühlluftraum zur Aufnahme von Kühlluft zum Kühlen der Zellen (2),
g) einem Entgasungsraum zur Aufnahme eines in einem Störfall aus den Zellen (2) austretenden Gases,
h) der Kühlluftraum und der Entgasungsraum sind gasdicht voneinander getrennt ausgebildet,
i) der Kühlluftraum und der Entgasungsraum sind unabhängig voneinander aus dem Gehäuse geführt,
**dadurch gekennzeichnet, dass**
j) der Kühlluftraum Kanäle (7) umfasst, die außerhalb der Zellen (2) an den Mänteln (14) der Zellen (2) geführt sind.

2. Elektrochemischer Akkumulator nach Anspruch 1, **dadurch gekennzeichnet, dass** die Zellen (2) zylindrisch ausgebildet sind.

3. Elektrochemischer Akkumulator nach Anspruch 1 oder 2, **dadurch gekennzeichnet, dass** der Entgasungsraum zylindrische Räume umfasst, die außerhalb der Zellen (2) an den Grundflächen oder den Deckflächen der Zellen (2) angeordnet sind.

4. Elektrochemischer Akkumulator nach einem der vorstehenden Ansprüche, **dadurch gekennzeichnet, dass** die Zellen (2) Berstöffnungen aufweisen, über die die Innenräume der Zellen (2) mit dem Entgasungsraum derart verbunden sind, dass Gas aus den Innenräumen der Zellen (2) in den Entgasungsraum entweichen kann.

5. Elektrochemischer Akkumulator nach Anspruch 4, **dadurch gekennzeichnet, dass** die Berstöffnungen mit Berstmembranen verschlossen sind.

6. Elektrochemischer Akkumulator nach einem der vorstehenden Ansprüche, **dadurch gekennzeichnet, dass** in dem Gehäuse ein Träger (3) vorgesehen ist, in dem die Zellen (2) im zusammengebauten Zustand getragen werden.

7. Elektrochemischer Akkumulator nach einem der vorstehenden Ansprüche, **dadurch gekennzeichnet, dass** die Zellen (2) Lithium-lonen-Zellen sind.

8. Fahrzeug mit
a) einem elektrochemischem Akkumulator nach einem der vorstehenden Ansprüche,
b) einem Fahrgastraum und
c) einem Ventilator, der ausgebildet ist, Kühlluft (16, 17) aus dem Fahrgastraum in den Akkumulator zu führen.

9. Fahrzeug nach Anspruch 8, **dadurch gekennzeichnet, dass** der Ventilator derart zwischen dem Akkumulator und dem Fahrgastraum angeordnet ist, dass die Kühlluft (16, 17) aus dem Fahrgastraum durch den Akkumulator gedrückt wird.

10. Fahrzeug nach Anspruch 8, **dadurch gekennzeichnet, dass** der Ventilator derart hinter dem Akkumulator angeordnet ist, dass die Kühlluft (16, 17) aus dem Fahrgastraum durch den Akkumulator gezogen wird.

11. Fahrzeug nach einem der Ansprüche 8 bis 10, **dadurch gekennzeichnet, dass** es als Hybrid-Fahrzeug oder als Elektrofahrzeug ausgebildet ist.

## Claims

1. An electrochemical accumulator having
a) a multiplicity of electrochemical cells (2),
b) a cover,
c) a housing which is closed by the cover,
d) at least one connecting pole for making electrical contact with the accumulator (1), which connecting pole is electrically connected to a group of the electrochemical cells (2),
e) an electrolyte in the housing,
f) a cooling air area for holding cooling air for cooling the cells (2),
g) a degassing area for holding a gas which emerges from the cells (2) in the event of a defect,
h) the cooling air area and the degassing area are separated from one another in a gas-tight manner, and
i) the cooling air area and the degassing area are passed out of the housing independently of one another,
**characterized in that**
j) the cooling air area has channels (7) which are guided on the casings (14) of the cells (2) outside the cells (2).

2. The electrochemical accumulator as claimed in claim 1, **characterized in that** the cells (2) are cylindrical.

3. The electrochemical accumulator as claimed in claim 1 or 2, **characterized in that** the degassing area comprises cylindrical areas which are arranged
outside the cells (2) on the base surfaces or the covering surfaces of the cells (2).

4. The electrochemical accumulator as claimed in one of the preceding claims, **characterized in that** the cells (2) have bursting openings via which the internal areas in the cells (2) are connected to the degassing area such that gas can escape from the internal areas in the cells (2) into the degassing area.

5. The electrochemical accumulator as claimed in claim 4, **characterized in that** the bursting openings are closed by bursting membranes.

6. The electrochemical accumulator as claimed in one of the preceding claims, **characterized in that** a support (3) is provided in the housing, in which the cells (2) are supported in the assembled state.

7. The electrochemical accumulator as claimed in one of the preceding claims, **characterized in that** the cells (2) are lithium-ion cells.

8. A vehicle having
a) an electrochemical accumulator as claimed in one of the preceding claims,
b) a passenger compartment and
c) a fan, which is designed to pass cooling air (16, 17) from the passenger compartment into the accumulator.

9. The vehicle as claimed in claim 8, **characterized in that** the fan is arranged between the accumulator and the passenger compartment such that the cooling air (16, 17) from the passenger compartment is
forced through the accumulator.

10. The vehicle as claimed in claim 8, **characterized in that** the fan is arranged behind the accumulator such that the cooling air (16, 17) from the passenger compartment is drawn through the accumulator.

11. The vehicle as claimed in one of claims 8 to 10, **characterized in that** the vehicle is a hybrid vehicle or an electrical vehicle.

## Revendications

1. Accumulateur électrochimique présentant :
a) plusieurs cellules galvaniques (2),
b) un couvercle,
c) un boîtier fermé par le couvercle,
d) au moins une borne de raccordement qui assure le contact électrique de l'accumulateur (1) relié électriquement à un ensemble de cellules galvaniques (2) ,
e) un électrolyte prévu dans le boîtier,
f) un espace d'air de refroidissement qui reprend de l'air de refroidissement destiné à refroidir les cellules (2),
g) un espace de dégazage qui reprend un gaz dégagé par les cellules (2) en cas de perturbation,
h) l'espace pour l'air de refroidissement et l'espace de dégazage étant séparés hermétiquement l'un de l'autre,
i) l'espace pour l'air de refroidissement et l'espace de dégazage étant prolongés hors du boîtier indépendamment l'un de l'autre,
**caractérisé en ce que**
j) l'espace pour l'air de refroidissement comporte des canaux (7) qui sont prolongés à l'extérieur des cellules (2) sur les enveloppes (14) des cellules (2).

2. Accumulateur électrochimique selon la revendication 1, **caractérisé en ce que** les cellules (2) ont une forme cylindrique.

3. Accumulateur électrochimique selon les revendications 1 ou 2, **caractérisé en ce que** l'espace de dégazage comporte des espaces cylindriques disposés à l'extérieur des cellules (2) sur les surfaces de base ou sur les surfaces de couvercle des cellules (2).

4. Accumulateur électrochimique selon l'une des revendications précédentes, **caractérisé en ce que** les cellules (2) présentent des ouvertures d'éclatement par lesquelles les espaces intérieurs des cellules (2) sont reliés à l'espace de dégazage de telle sorte que le gaz puisse passer des espaces intérieurs des cellules (2) à l'espace de dégazage.

5. Accumulateur électrochimique selon la revendication 4, **caractérisé en ce que** les ouvertures d'éclatement sont fermées par des membranes d'éclatement.

6. Accumulateur électrochimique selon l'une des revendications précédentes, **caractérisé en ce qu'**un support (3) dans lequel les cellules (2) sont portées à l'état assemblé est prévu dans le boîtier.

7. Accumulateur électrochimique selon l'une des revendications précédentes, **caractérisé en ce que** les cellules (2) sont des cellules à ions lithium.

8. Véhicule présentant :
a) un accumulateur électrochimique selon l'une des revendications précédentes,
b) un habitacle et
c) un ventilateur configuré pour amener de l'air de refroidissement (16, 17) depuis l'habitacle jusque dans l'accumulateur.

9. Véhicule selon la revendication 8, **caractérisé en ce que** le ventilateur est disposé entre l'accumulateur et l'habitacle de telle sorte que l'air de refroidissement (16, 17) provenant de l'habitacle soit refoulé à travers l'accumulateur.

10. Véhicule selon la revendication 8, **caractérisé en ce que** le ventilateur est disposé en aval de l'accumulateur de telle sorte que l'air de refroidissement (16, 17) provenant de l'habitacle soit aspiré à travers l'accumulateur.

11. Véhicule selon l'une des revendications 8 à 10, **caractérisé en ce qu'**il est configuré comme véhicule hybride ou comme véhicule électrique.
